# EUROPÄISCHE PATENTSCHRIFT

(11) **EP 2 287 742 B1**
(45) Veröffentlichungstag und Bekanntmachung des Hinweises auf die Patenterteilung: **26.09.2012**
(21) Anmeldenummer: 10011751.4
(22) Anmeldetag: 02.08.2002
(51) Int. Cl.: G06F 11/36

(54) **Programmgesteuerte Einheit**
Program controlled unit
Unité commandée par programme

(30) Priorität: 08.08.2001 DE 10138918
(43) Veröffentlichungstag der Anmeldung: 23.02.2011
(62) Teilanmeldung aus: 02017377.9
(73) Patentinhaber: Infineon Technologies AG, 85579 Neubiberg (DE)
(72) Erfinder: McDonald-Maier, Klaus, Harwich CO12 4EE (GB)
(74) Vertreter: Graf Lambsdorff, Matthias

(56) Entgegenhaltungen:
- EP-A- 0 764 903
- MACNAMEE C: "EIN INTERFACE FUER ALLE NEXUS ALS GLOBALER DEBUG-STANDARD", ELEKTRONIKPRAXIS, VOGEL, WUERZBURG, DE, Nr. 3, 8. Februar 2000 (2000-02-08), Seiten 104-106,108, XP008001346, ISSN: 0341-5589

## Beschreibung

Die vorliegende Erfindung betrifft eine Vorrichtung gemäß dem Oberbegriff des Patentanspruchs 1, d.h. eine programmgesteuerte Einheit, mit einem Core zur Ausführung des von der programmgesteuerten Einheit auszuführenden Programmes, und mit Debug-Ressourcen zur Verfolgung und Beeinflussung der innerhalb des Core ablaufenden Vorgänge.

Die EP 0764903 A1 beschreibt einen Debug-Port der innerhalb einer internen Logik eines Einzelchips eingebettet ist. Der Debug-Port weist eine Debug-Bus-Einheit, eine Debug-Befehl-Einheit einen Debug-Instruktion-Einheit, eine Debug-Einspeisen/Ausgeben-Einheit und eine Debug-Fluss-Einheit auf, die interagierende funktionale Elemente des Debug-Ports darstellen. Die Debug-Bus-Einheit stellt eine Schaltungsanordnung bereit zum Puffern von Daten, die von dem Signal-Prozessor oder anderen funktionalen Elementen oder extern empfangen werden, wobei die Debug-Bus-Einheit eine Off-Chip Verbindung liefert. Die Debug-Befehl-Einheit stellt eine Schaltungsanordnung bereit zum Dekodieren und Ausführen von Debug Befehlen, die von dem Debug-Port empfangen werden. Die Debug Instruktion-Einheit stellt eine Schaltungsanordnung bereit, um Instruktionen mit oder ohne Daten in den Instruktionsstrom des Signalprozessors einzufügen. Die Einspeisen/Ausgeben-Einheit stellt einee Schaltungsanordnung bereit, um externe Quellen von Information in den unter der Programmsteuerung stehenden Signalprozessor einzuspeisen. Die Debug-Fluss-Einheit stellt eine Schaltungsanordnung zum Überwachen der Programmausführung bereit.

Die Druckschrift MacNamee, C. "Ein Interface fuer alle - NEXUS als globaler Debug-Standard", Elektronikpraxis, Vogel, Wuerzburg, Februar 2000 Seiten 104-106,108, XP 8001346 beschreibt die Entwicklung des NEXUS Standards und eine Einteilung von Entwicklungswerkzeugen nach dem GEPDIS in 4 Klassen.

Die Druckschrift EP-A-0 313 848 offenbart einen Mikrocomputer mit einer CPU, die über einen Bus mit einem Modul verbunden ist. Das Modul umfasst einen Register mit einem 2-Bit Feld, über dessen Konfiguration die externe Sichtbarkeit von Buszyklen gesteuert wird.

Programmgesteuerte Einheiten wie Mikroprozessoren, Mikrocontroller, Signalprozessoren etc. sind in unzähligen Ausführungsformen bekannt und bedürfen keiner näheren Erläuterung.

Ein bekanntes Problem von programmgesteuerten Einheiten besteht darin, daß es häufig nicht oder nicht ohne weiteres möglich ist, auftretende Fehler zu lokalisieren und zu beheben.

Aus diesem Grund ist man dazu übergegangen, programmgesteuerte Einheiten mit Debug-Ressourcen auszustatten, durch welche die innerhalb der programmgesteuerten Einheit ablaufenden Vorgänge verfolgt und beeinflußt werden können. Zu diesen Debug-Ressourcen gehören beispielsweise die bekannten On-Chip-Debug-Support-Module bzw. OCDS-Module.

Solche und andere Debug-Ressourcen ermöglichen es, das Auftreten von von außerhalb der programmgesteuerten Einheit vorgebbaren Zuständen oder Ereignissen innerhalb der programmgesteuerten Einheit zu überwachen und dann, wenn ein solcher Zustand oder ein solches Ereignis aufgetreten ist, von außerhalb der programmgesteuerten Einheit vorgebbare Aktionen durchzuführen.

Die Zustände oder Ereignisse, deren Auftreten durch die Debug-Ressourcen überwachbar sind, können beispielsweise, aber bei weitem nicht ausschließlich umfassen:
- den Zugriff der programmgesteuerten Einheit oder bestimmter Komponenten derselben auf bestimmte Speicheradressen oder Register, und/oder
- den Transfer bestimmter Daten innerhalb der programmgesteuerten Einheit, und/oder
- den Stand des Instruction Pointers.

Die Aktionen, die die Debug-Ressourcen beim Auftreten eines solchen oder anderen Zustandes oder Ereignisses ausführen, können beispielsweise, aber ebenfalls nicht ausschließlich umfassen:
- eine Meldung des Umstandes, daß die zu überwachende Bedingung eingetreten ist, an eine außerhalb der programmgesteuerten Einheit vorgesehene Einrichtung,
- das Auslesen oder das Verändern des Inhalts bestimmter Speicherelemente oder Register,
- die Ausgabe von Trace-Informationen, d.h. die Ausgabe von innerhalb der programmgesteuerten Einheit transferierten oder verwendeten Adressen, Daten und/oder Steuersignalen, an eine außerhalb der programmgesteuerten Einheit vorgesehenen Einrichtung,
- das Anhalten der Programmausführung,
- die Fortsetzung des Programmausführung im sogenannten Single-Step-Modus, oder
- das Ausführen von zum Debuggen oder Emulieren der programmgesteuerten Einheit dienenden Routinen.

Das Vorsehen solcher Debug-Ressourcen in programmgesteuerten Einheiten bietet somit eine ganze Reihe von Möglichkeiten, in der programmgesteuerten Einheit auftretende Fehler zu lokalisieren und zu beheben.

Ein bekannter Nachteil solcher Debug-Ressourcen besteht darin, daß es damit häufig nicht möglich ist, die programmgesteuerte Einheit in Echtzeit zu untersuchen. Beispielsweise wenn die Debug-Ressourcen den Core der programmgesteuerten Einheit dazu veranlassen,
- die Programmausführung anzuhalten, oder
- die Programmausführung im Single-Step-Modus fortzusetzen, oder
- Befehle auszuführen, die nicht zum eigentlich auszuführenden (Anwendungs-)Programm gehören, sondern zum Debuggen oder Emulieren der programmgesteuerten Einheit dienende Befehle sind,
verhält sich die programmgesteuerte Einheit häufig anders als es im normalen Betrieb derselben der Fall ist. Die Folge hiervon ist, daß Fehler, die im normalen Betrieb der programmgesteuerten Einheit auftreten, während des Debuggens oder Emulierens der programmgesteuerten Einheit unter Verwendung der Debug-Ressourcen häufig nicht auftreten, und/oder daß während des Debuggens oder Emulierens der programmgesteuerten Einheit unter Verwendung der Debug-Ressourcen bisweilen Fehler auftreten, die im normalen Betrieb der programmgesteuerten Einheit nicht auftreten.

Dies schränkt die Einsatzmöglichkeiten der Debug-Ressourcen stark ein. Insbesondere können in komplexen programmgesteuerten Einheiten oder Anwendungen auftretende Fehler durch die Debug-Ressourcen häufig nicht oder nur teilweise, oder nur mit sehr großem Aufwand lokalisiert und behoben werden.

Der vorliegenden Erfindung liegt daher die Aufgabe zugrunde, die programmgesteuerte Einheit gemäß dem Oberbegriff des Patentanspruchs 1 derart weiterzubilden, daß darin auftretende Fehler unter allen Umständen schnell und einfach lokalisiert und behoben werden können.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß die Debug-Ressourcen in der Lage sind, auch andere Komponenten der programmgesteuerten Einheit als den Core derselben und/oder die Kooperation dieser Komponenten untereinander und/oder mit dem Core zu beeinflussen.

Dadurch lassen sich Probleme vermeiden, die bei herkömmlichen programmgesteuerten Einheiten auftreten, wenn die Debug-Ressourcen den Core in einen Zustand versetzen, in welchem sich dieser anders verhält als im normalen Betrieb. Insbesondere lassen sich dadurch die Probleme vermeiden, die daraus resultieren, daß die Komponenten der programmgesteuerten Einheit bei einem veränderten Verhalten des Core nicht mehr wie beabsichtigt arbeiten und/oder kooperieren.

Durch die Möglichkeit, nicht nur den Core, sondern auch andere Komponenten der programmgesteuerten Einheit in einen Zustand zu versetzen, in welchem sich diese anders verhalten als im normalen Betrieb, kann das Verhalten der anderen Komponenten an das veränderte Verhalten des Core angepaßt werden. Vorzugsweise wird vorgesehen, daß die Debug-Ressourcen dann, wenn sie den Core der programmgesteuerten Einheit in einen Zustand versetzen, in welchem dieser sich anders verhält als im normalen Betrieb, automatisch gleichzeitig die anderen Komponenten der programmgesteuerten Einheit an das veränderte Verhalten des Core anpaßt.

Dadurch kann auf einfache Art und Weise weitestgehend vermieden werden, daß während des Debuggens oder Emulierens der programmgesteuerten Einheit Störungen oder Fehler auftreten, die im normalen Betrieb der programmgesteuerten Einheit nicht auftreten, und/oder daß im normalen Betrieb der programmgesteuerten Einheit auftretende Fehler während des Debuggens oder Emulierens der programmgesteuerten Einheit nicht auftreten.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher beschrieben. Es zeigen
- Figur 1: den Aufbau einer programmgesteuerten Einheit gemäß einem ersten Ausführungsbeispiel der Erfindung, und
- Figur 2: den Aufbau einer programmgesteuerten Einheit gemäß einem zweiten Ausführungsbeispiel der Erfindung.

Bei der im folgenden beschriebenen programmgesteuerten Einheit handelt es sich um einen Mikrocontroller. Es sei jedoch bereits an dieser Stelle darauf hingewiesen, daß die nachfolgend beschriebenen Besonderheiten des Mikrocontrollers auch in beliebigen anderen programmgesteuerten Einheiten wie Mikroprozessoren, Signalprozessoren, etc. vorgesehen werden können.

Die im folgenden beschriebenen programmgesteuerten Einheiten zeichnen sich dadurch aus, daß deren Debug-Ressourcen in der Lage sind, nicht nur den Core, sondern auch andere Komponenten der programmgesteuerten Einheit und/oder die Kooperation dieser Komponenten untereinander und/oder mit dem Core zu beeinflussen.

Der Vollständigkeit halber sei bereits an dieser Stelle darauf hingewiesen, daß von den betrachteten programmgesteuerten Einheiten nur die vorliegend besonders interessierenden Komponenten gezeigt und beschrieben sind.

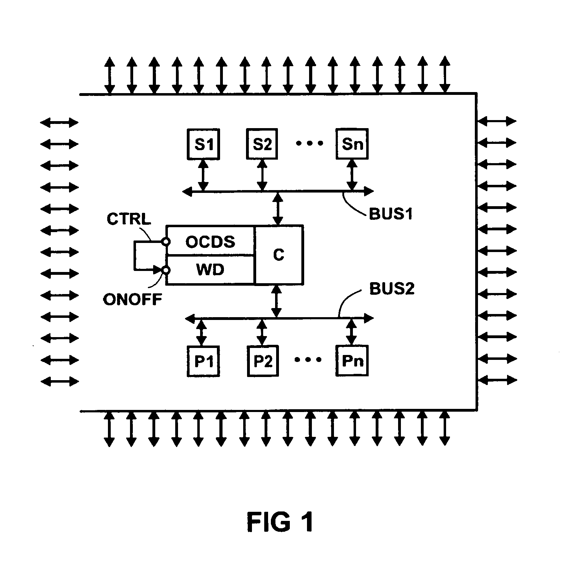

Die in der Figur 1 gezeigte programmgesteuerte Einheit enthält einen Core C, über einen ersten Bus BUS1 mit dem Core C verbundene Speichereinrichtungen S1 bis Sn, über einen zweiten Bus BUS2 mit dem Core C verbundene Peripherieeinheiten P1 bis Pn, einen Watchdog-Timer WD, und ein OCDS-Modul OCDS.

Der Core C liest aus den Speichereinrichtungen S1 bis Sn oder aus einer in der Figur 1 nicht gezeigten, außerhalb des Mikrocontrollers vorgesehenen externen Speichereinrichtung Befehle und Operanden repräsentierende Daten aus und führt diese aus.

Die Speichereinrichtungen S1 bis Sn können durch ein ROM, einen Flashspeicher, ein RAM, oder durch beliebige andere Speichereinrichtungen gebildet werden.

Die Peripherieeinheiten P1 bis Pn sind beispielsweise ein A/D-Wandler, ein Timer, eine Codiereinrichtung, ein DMA-Controller, ein CAN-Controller, ein USB-Controller, oder sonstige in Mikrocontroller integrierbare Einrichtungen.

Der Watchdog-Timer WD ist ein Zähler, welcher
- in einem bestimmten Takt automatisch aufwärts oder abwärts zählt,
- beim Auftreten vorbestimmter Ereignisse zurückgesetzt wird, und
- beim Erreichen eines bestimmten Zählstandes eine bestimmte Aktion ausführt oder veranlaßt, wobei diese Aktion beispielsweise darin besteht, daß der Watchdog-Timer WD entweder die programmgesteuerte Einheit insgesamt, oder aber zumindest den Core C und/oder eine oder mehrere andere Komponenten der programmgesteuerten Einheit zurücksetzt oder in einen bestimmten anderen Zustand versetzt.

Der Aufbau, die Funktion und die Wirkungsweise von Watchdog-Timern sind bekannt, so daß auf die Beschreibung weiterer Einzelheiten verzichtet werden kann.

Das OCDS-Modul OCDS ist ein OCDS-Modul der eingangs beschriebenen Art, weist aber demgegenüber einige Besonderheiten auf. Der Vollständigkeit halber sei angemerkt, daß das OCDS-Modul über einen oder mehrere Ein- und/oder Ausgangsanschlüsse der programmgesteuerten Einheit, beispielsweise über ein JTAG- oder ein NEXUS-Interface mit einer außerhalb der programmgesteuerten Einrichtung vorgesehenen Einrichtung verbunden werden kann.Diese externe Einrichtung steuert das OCDS-Modul, d.h. gibt dem OCDS-Modul vor, wann es welche Aktionen durchzuführen hat, und wertet vom OCDS-Modul ausgegebene Informationen aus.

Die erwähnten Besonderheiten des OCDS-Moduls bestehen im betrachteten Beispiel darin, daß das OCDS-Modul den Watchdog-Timer automatisch deaktiviert,wenn das OCDS-Moduleine Aktion ausführt, durch die das Verhalten der programmgesteuerten Einheit verändert wird.

Die genannte Aktion ist eine Aktion,
- durch welche die Ausführung des von der programmgesteuerten Einheit auszuführenden Programms angehalten oder unterbrochen wird, oder
- durch welche die Geschwindigkeit verändert wird, mit welcher das von der programmgesteuerten Einheit auszuführende Programms ausgeführt wird, also beispielsweise das Versetzen der programmgesteuerten Einheit in den Single-Step-Mode, oder
- durch welche die programmgesteuerte Einheit, genauer gesagt der Core C derselben zur Ausführung von Befehlen veranlaßt wird, die nicht Bestandteil des von der programmgesteuerten Einheit eigentlich auszuführenden (Anwendungs-) Programms sind, sondern oder zum Debuggen oder zum Emulieren der programmgesteuerten Einheit dienende Befehle sind.

Das Deaktivieren des Watchdog-Timers WD erfolgt dadurch, daß das OCDS-Modul ein Deaktivierungssignal ausgibt, welches dem Watchdog-Timer, genauer gesagt einem zur Aktivierung und Deaktivierung desselben vorgesehenen Anschluß ONOFF über eine Steuerleitung CTRL zugeführt wird.

Das Deaktivieren des Watchdog-Timer WD erfolgt in den vorstehend genannten Situationen automatisch, d.h. ohne Ausführung eines speziellen Befehls und ohne gesonderte Veranlassung durch die das OCDS-Modul steuernde externe Einrichtung.

Normalerweise, d.h. bei programmgesteuerten Einheiten ohne das vorliegend verwendete OCDS Modul erfolgt die Aktivierung und Deaktivierung des Watchdog-Timers WD ausschließlich über eine mit dem Anschluß ONOFF des Watchdog-Timers verbundene, in der Figur 1 nicht gezeigte Systemsteuereinheit (system control unit), wobei diese Systemsteuereinheit durch von der programmgesteuerten Einheit ausgeführte Befehle oder durch eine die programmgesteuerte Einheit nach dem Rücksetzen derselben initialisierende Logik zur Aktivierung und Deaktivierung des Watchdog-Timers veranlaßt wird. D.h., daß bei programmgesteuerten Einheiten ohne das vorliegend verwendete OCDS-Modul ein spezieller Befehl zur Ausführung gebracht werden müßte, um den Watchdog-Timer während des Debuggens oder Emulierens der programmgesteuerten Einheit zurücksetzen zu können.

Die durch das vorliegend verwendete OCDS-Modul durchgeführte automatische Deaktivierung des Watchdog-Timers weist demgegenüber mehrere Vorteile auf. Insbesondere wird dadurch die Bedienung des OCDS-Moduls einfacher, und ferner ist dadurch eine mögliche Fehlerquelle beim Debuggen oder Emulieren ausgeschaltet. Der Grund für den erstgenannten Vorteil liegt darin, daß keine Notwendigkeit mehr besteht, spezielle Aktionen zur Deaktivierung des Watchdog-Timers vorzunehmen. Der Grund für den zweiten Vorteil besteht darin, daß es zuverlässig ausgeschlossen ist, daß der Watchdog-Timer das Debuggen oder Emulieren der programmgesteuerten Einheit stört; ein versehentlich nicht deaktivierter Watchdog-Timer könnte dazu führen, daß die programmgesteuerte Einheit während des Debuggens oder Emulierens derselben zurückgesetzt wird, wobei das Zurücksetzen selbst und/oder die Ursache hierfür nicht ohne weiteres erkennbar sind.

Der Watchdog-Timer WD wird vorzugsweise nach der Beendigung der Vorgänge, auf die hin der Watchdog-Timer deaktiviert wurde, also dann, wenn die programmgesteuerte Einheit das Anwendungsprogramm wieder normal ausführt (nicht angehalten ist, nicht im Single-Step-Modus arbeitet, nicht zum Debuggen oder zum Emulieren dienende Befehle ausführt), wieder aktiviert. Dadurch wird erreicht, daß die programmgesteuerte Einheit - soweit es unter den gegebenen Umständen möglich ist - während des Debuggens oder des Emulieren derselben wie im normalen Betrieb arbeitet.

Durch die vorstehend beschriebene Deaktivierung des Watchdog-Timers WD wird dieser oder zumindest bestimmte Teile desselben abgeschaltet. D.h. ein deaktivierter Watchdog-Timer zählt nicht mehr oder veranlaßt zumindest keine Aktionen mehr, wenn er den Zählstand erreicht, bei dessen Erreichen er im aktivierten Zustand ein Zurücksetzen der programmgesteuerten Einheit oder von Teilen derselben, oder sonstige Aktionen veranlassen würde.

Die Deaktivierung des Watchdog-Timers WD kann auch anders als vorstehend beschrieben durchgeführt werden.

Eine der hierfür geeigneten Möglichkeiten besteht darin, daß das OCDS-Modul den Watchdog-Timer beim Auftreten der Ereignisse, auf die hin der Watchdog-Timer zu deaktivieren ist, eine automatische Umkonfiguration des Watchdog-Timers durchführt. Diese Umkonfiguration kann beispielsweise darin bestehen, daß der Zählstand, bei dessen Erreichen der Watchdog-Timer die programmgesteuerte Einheit oder Teile derselben zurücksetzt, auf einen Wert gesetzt wird, der in Phasen, in welche sich die programmgesteuerte Einheit anders als im normalen Betrieb verhält, nicht erreicht werden kann. Durch eine solche oder eine andere Umkonfiguration kann im Ergebnis der selbe Effekt erzielt werden wie durch die vorstehend beschriebene Deaktivierung des Watchdog-Timers: der Watchdog-Timer setzt die programmgesteuerte Einheit in Phasen, in welche diese sich anders als im normalen Betrieb verhält, nicht zurück.

Eine weitere Möglichkeit zur Deaktivierung des Watchdog-Timers besteht darin, daß das OCDS-Modul den Watchdog-Timer in Phasen, in welchen sich die programmgesteuerte Einheit anders als im normalen Betrieb verhält, regelmäßig zurücksetzt. Auch hierdurch kann erreicht werden, daß der Watchdog-Timer die programmgesteuerte Einheit in Phasen, in welche diese sich anders als im normalen Betrieb verhält, nicht zurücksetzt.

Die Deaktivierung des Watchdog-Timers kann ferner dadurch erfolgen, daß das OCDS-Modul dafür sorgt, daß die Erzeugung oder die Zufuhr des Taktsignals, in Abhängigkeit von welchem der Watchdog-Timer zählt, unterbunden wird. Alternativ könnte vorgesehen werden, daß dem Watchdog-Timer ein Taktsignal mit einer niedrigeren Frequenz zugeführt wird. Auch durch diese Maßnahmen kann erreicht werden, daß der Watchdog-Timer die programmgesteuerte Einheit in Phasen, in welche diese sich anders als im normalen Betrieb verhält, nicht zurücksetzt.

Der Vollständigkeit halber sei darauf hingewiesen, daß das OCDS-Modul auch die genannten Alternativen zur zuerst beschriebenen Deaktivierung des Watchdog-Timers automatisch durchführt, wenn sich die programmgesteuerte Einheit anders als im normalen Betrieb verhält.

Unabhängig von alledem kann vorgesehen werden, daß das OCDS-Modul zusätzlich zum Watchdog-Timer oder anstelle des Watchdog-Timers weitere bzw.andere Komponenten automatisch deaktiviert,wenn sich die programmgesteuerte Einheit anders als im normalen Betrieb verhält. Eine Komponente, bei der sich dies als vorteilhaft erweisen könnte, ist beispielsweise, aber ganz offensichtlich nicht ausschließlich ein DMA-Controller.

Die automatische Deaktivierung des Watchdog-Timers oder sonstiger Komponenten der programmgesteuerten Einheit kann auch durch andere Debug-Ressourcen als ein OCDS-Modul durchgeführt werden.

Ferner kann vorgesehen werden, daß das OCDS-Modul den Watchdog-Timer oder sonstige Komponenten der programmgesteuerten Einheit anders als durch eine Deaktivierung beeinflußt. Welche Beeinflussungen dies sein können, hängt vom jeweiligen Einzelfall ab. Ziel ist es jeweils, das Verhalten der beeinflußten Komponenten durch die Beeinflussung möglichst optimal an das veränderte Verhalten des Core anzupassen. Optimale Anpassung bedeutet hierbei, daß die beeinflußten Komponenten aufgrund der Beeinflussung so arbeiten und kooperieren, daß während des Debuggens oder Emulierens der programmgesteuerten Einheit genau die im normalen Betrieb der programmgesteuerten Einheit auftretenden Fehler und Störungen auftreten, d.h. nach Möglichkeit nicht mehr, nicht weniger, und nicht andere Fehler und Störungen auftreten als im normalen Betrieb der programmgesteuerten Einheit.

Es kann auch vorgesehen werden, daß das OCDS-Modul oder sonstige Debug-Ressourcen automatisch die Kooperation bestimmter Komponenten untereinander und/oder mit dem Core beeinflussen, wenn sich die programmgesteuerte Einheit anders als im normalen Betrieb verhält. Der Vollständigkeit halber sei bereits an dieser Stelle darauf hingewiesen, daß dies unabhängig von der vorstehend beschriebenen Deaktivierung erfolgen kann.

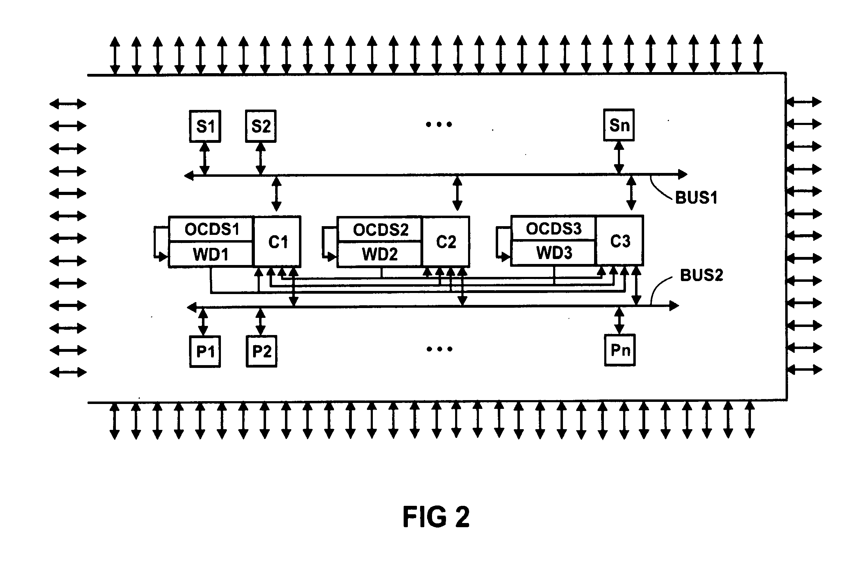

Eine programmgesteuerte Einheit, bei welcher dies der Fall ist, ist in Figur 2 gezeigt.

Die in der Figur 2 gezeigte programmgesteuerte Einheit enthält
- mehrere Cores, genauer gesagt einen ersten Core C1, einen zweiten Core C2, und einen dritten Core C3,
- mehrere Watchdog-Timer, genauer gesagt einen dem ersten Core C1 zugeordneten ersten Watchdog-Timer WD1, einen dem zweiten Core C2 zugeordneten zweiten Watchdog-Timer WD2, und einen dem dritten Core C3 zugeordneten dritten Watchdog-Timer WD3,
- ein aus drei Komponenten bestehendes OCDS-Modul, genauer gesagt eine dem ersten Core C1 zugeordnete erste OCDS-Modulkomponente OCDS1, eine dem zweiten Core C2 zugeordnete zweite OCDS-Modulkomponente OCDS2, und eine dem dritten Core C3 zugeordnete dritte OCDS-Modulkomponente OCDS3,
und entspricht im übrigen der in der Figur 1 gezeigten programmgesteuerten Einheit, d.h. enthält diverse Speichereinrichtungen S1 bis Sn und Peripherieeinheiten P1 bis Pn.

Die Speichereinrichtungen S1 bis Sn können gemeinsame Speichereinrichtungen sein, auf welche alle Cores C1 bis C3 zugreifen können, es kann sich aber auch um private Speichereinrichtungen handeln, auf die jeweils nur ein bestimmter Core zugreifen kann. Entsprechendes gilt für die Peripherieeinheiten.

Die Speichereinrichtungen Sl bis Sn sowie die Peripherieeinheiten P1 bis Pn entsprechen im übrigen den Speichereinrichtungen und Peripherieeinheiten der programmgesteuerten Einheit gemäß Figur 1.

Die Cores C1 bis C3 arbeiten parallel. Sie lesen aus den Speichereinrichtungen S1 bis Sn oder aus einer in der Figur 2 nicht gezeigten, außerhalb des Mikrocontrollers vorgesehenen externen Speichereinrichtung Befehle und Operanden repräsentierende Daten aus und führen diese aus.

Die Watchdog-Timer WD1 bis WD3 entsprechen jeweils dem Watchdog-Timer WD der programmgesteuerten Einheit gemäß Figur 1. D.h., es handelt sich jeweils um Zähler, welche
- in einem bestimmten Takt automatisch aufwärts oder abwärts zählen,
- beim Auftreten vorbestimmter Ereignisse zurückgesetzt werden, und
- beim Erreichen eines bestimmten Zählstandes eine bestimmte Aktion ausführen oder veranlassen, wobei diese Aktion beispielsweise darin besteht, daß die Watchdog-Timer entweder die programmgesteuerte Einheit insgesamt, oder aber zumindest einen oder mehrere Cores und/oder eine oder mehrere andere Komponenten der programmgesteuerten Einheit zurücksetzen oder in einen bestimmten anderen Zustand versetzen.

Obgleich die Watchdog-Timer WD1 bis WD3 jeweils einem bestimmten Core zugeordnet sind, kann jeder der Watchdog-Timer bei Erreichen des bestimmten Zählstandes einen oder mehrere beliebige Cores zurücksetzen. Welcher Watchdog-Timer welchen Core oder welche Cores zurücksetzt, ist in den Watchdog-Timern oder einer in der Figur 2 nicht gezeigten Steuereinrichtung einstellbar.

Die OCDS-Modulkomponenten OCDS1 bis OCDS3 entsprechen jeweils dem OCDS-Modul OCDS der programmgesteuerten Einheit gemäß Figur 1. Sie weisen demgegenüber jedoch einige weitere Besonderheiten auf.

Diese Besonderheiten bestehen im betrachteten Beispiel darin, daß die OCDS-Modulkomponenten dann, wenn sie eine Aktion ausführen, durch die das Verhalten eines der Cores verändert wird, automatisch die Einstellung verändern, durch welche festgelegt ist, welcher Watchdog-Timer welchen Core zurücksetzen kann.

Die genannten Aktionen sind diejenigen Aktionen, bei welchen das OCDS-Modul OCDS der programmgesteuerten Einheit gemäß Figur 1 den Watchdog-Timer WD deaktiviert.

Dadurch kann, um nur eines von nahezu unbegrenzt vielen Beispielen zu nennen, eine Einstellung, bei welcher jeder Watchdog-Timer jeweils alle Cores zurücksetzt, dahingehend verändert werden, daß jeder Watchdog-Timer nur jeweils diejenigen Cores zurücksetzt, welchen er nicht zugeordnet ist.

Dabei können die verschiedenen OCDS-Modulkomponenten OCDS1 bis OCDS3 verschiedene Veränderungen der Einstellungen durchführen. Beispielsweise kann vorgesehen werden,
- daß die erste OCDS-Modulkomponente OCDS1 im Fall, daß durch sie veranlaßt wird, daß der Core, welchem sie zugeordnet ist, also der Core C1 sich anders als im normalen Betrieb verhält (z.B. angehalten wird, oder im Single-Step-Modus betrieben wird, oder zum Debuggen oder Emulieren dienende Befehle ausführt) die bestehende Einstellung dahingehend verändert, daß der dem Core C1 zugeordnete Watchdog-Timer WD1 keinen der vorhandenen Cores zurücksetzt, und die anderen Watchdog-Timer WD2 und WD3 den Core C2 und/oder den Core C3, aber nicht den Core C1 zurücksetzen können,
- daß die zweite OCDS-Modulkomponente OCDS2 im Fall, daß durch sie veranlaßt wird, daß der Core, welchem sie zugeordnet ist, also der Core C2 sich anders als im normalen Betrieb verhält (z.B.angehalten wird,oderim Single-Step-Modus betrieben wird, oder zum Debuggen oder Emulieren dienende Befehle ausführt) die bestehende Einstellung dahingehend verändert, daß der dem Core C2 zugeordnete Watchdog-Timer WD2 keinen der vorhandenen Cores zurücksetzt, und die anderen Watchdog-Timer WD1 und WD3 den Core C1 und/oder den Core C3, aber nicht den Core C2 zurücksetzen können, und
- daß die dritte OCDS-Modulkomponente OCDS3 im Fall, daß durch sie veranlaßt wird, daß der Core, welchem sie zugeordnet ist, also der Core C3 sich anders als im normalen Betrieb verhält (z.B.angehalten wird,oderim Single-Step-Modus betrieben wird, oder zum Debuggen oder Emulieren dienende Befehle ausführt) die bestehende Einstellung dahingehend verändert, daß der dem Core C3 zugeordnete Watchdog-Timer WD3 keinen der vorhandenen Cores zurücksetzt, und die anderen Watchdog-Timer WD1 und WD2 den Core C1 und/oder den Core C2, aber nicht den Core C3 zurücksetzen können.

Selbstverständlich sind auch beliebige andere Kombinationen möglich.

Ferner kann durch die OCDS-Modulkomponenten auch Einfluß darauf genommen werden, ob und gegebenenfalls welche anderen Komponenten der programmgesteuerten Einheit durch die jeweiligen Watchdog-Timer zurückgesetzt werden.

Vorzugsweise veranlassen die OCDS-Modulkomponenten, daß die Einstellungsveränderungen ganz oder teilweise wieder rückgängig gemacht werden, wenn der Core, dem sie jeweils zugeordnet sind, wieder normal arbeitet (nicht mehr angehalten ist, nicht mehr im Single-Step-Modus arbeitet, und kein zum Debuggen oder Emulieren dienendes Programm ausführt etc.).

Durch die durch die OCDS-Modulkomponenten durchführbaren Einstellungsveränderungen läßt sich die programmgesteuerte Einheit während des Debuggens oder Emulierens derselben in einen Zustand bringen, in welchem das Debuggen oder das Emulieren möglichst wenig gestört werden, und/oder sich die programmgesteuerte Einheit während des Debuggens oder Emulierens - soweit es unter den gegebenen Umständen möglich ist - wie im normalen Betrieb verhält.

Darüber hinaus kann (muß aber nicht) vorgesehen werden, daß die OCDS-Modulkomponenten die Watchdog-Timer wie das OCDS-Modul der programmgesteuerten Einheit gemäß Figur 1 deaktivieren können.

Die beschriebenen programmgesteuerten Einheiten ermöglichen es unabhängig von den Einzelheiten der praktischen Realisierung, daß darin auftretende Fehler unter allen Umständen schnell und einfach lokalisiert und behoben werden können.

## Patentansprüche

1. Programmgesteuerte Einheit, mit einem Core (C; C1-C3) zur Ausführung des von der programmgesteuerten Einheit auszuführenden Programmes, und mit Debug-Ressourcen (OCDS; OCDS1-OCDS3) zur Verfolgung und Beeinflussung der innerhalb des Core (C; C1-C3) ablaufenden Vorgänge,
**dadurch gekennzeichnet,**
**daß** die Debug-Ressourcen (OCDS; OCDS1-0CDS3) in der Lage sind, auch andere Komponenten (WD, P1-Pn, S1-Sn; WD1-WD3, P1-Pn, S1-Sn) der programmgesteuerten Einheit und/oder die Kooperation dieser Komponenten untereinander und/oder mit dem Core (C; C1-C3) zu beeinflussen, wobei die Debug-Ressourcen (OCDS; OCDS1-OCDS3) die Beeinflussung der anderen Komponenten (WD, P1-Pn, S1-Sn; WD1-WD3, P1-Pn, S1-Sn) und/oder der Kooperation dieser Komponenten untereinander und/oder mit dem Core (C; C1-C3) ohne Ausführung eines speziellen Befehls und ohne gesonderte Veranlassung durch eine die Debug-Ressourcen (OCDS; OCDS1-OCDS3) steuernde externe Einrichtung beim Auftreten bestimmter Ereignisse durchführen.

2. Programmgesteuerte Einheit nach Anspruch 1,
**dadurch gekennzeichnet,**
**daß** die anderen Komponenten (WD, P1-Pn, S1-Sn; WD1-WD3, P1-Pn, S1-Sn) der programmgesteuerten Einheit Komponenten sind, deren Verhalten Einfluß auf das Verhalten des Core (C; C1-C3) hat.

3. Programmgesteuerte Einheit nach Anspruch 1 oder 2,
**dadurch gekennzeichnet,**
**daß** die anderen Komponenten (WD, P1-Pn, S1-Sn; WD1-WD3, P1-Pn, S1-Sn) der programmgesteuerten Einheit einen Watchdog-Timer (WD; WD1-WD3) umfassen.

4. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) eine Deaktivierung derselben umfaßt.

5. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) ein Abschalten derselben umfaßt.

6. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) umfaßt, daß die anderen Komponenten in einen bestimmten Zustand versetzt werden.

7. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) ein Zurücksetzen derselben umfaßt.

8. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) ein Umkonfigurieren derselben umfaßt .

9. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) eine Veränderung der diesen zugeführten Signale umfaßt.

10. Programmgesteuerte Einheit nach einem der vorhergehenden Ansprüche,
**dadurch gekennzeichnet,**
**daß** die Beeinflussung der Kooperation ein Unterbinden der Kooperation umfaßt.

11. Programmgesteuerte Einheit nach einem der vorhergehenden Ansprüche,
**dadurch gekennzeichnet,**
**daß** die Beeinflussung der Kooperation umfaßt, daß eine Kooperation von normalerweise nicht kooperierenden Komponenten veranlaßt wird.

12. Programmgesteuerte Einheit nach einem der vorhergehenden Ansprüche,
**dadurch gekennzeichnet,**
**daß** die bestimmten Ereignisse darin bestehen, daß durch von den Debug-Ressourcen (OCDS1, OCDS1-OCDS3) ausgeführte Aktionen das Verhalten der programmgesteuerten Einheit verändert wird.

13. Programmgesteuerte Einheit nach einem der vorhergehenden Ansprüche,
**dadurch gekennzeichnet,**
**daß** die bestimmten Ereignisse darin bestehen, daß durch von den Debug-Ressourcen (OCDS1; OCDS1-OCDS3) ausgeführte Aktionen das Verhalten des Core (C; C1-C3) verändert wird.

14. Programmgesteuerte Einheit nach einem der vorhergehenden Ansprüche,
**dadurch gekennzeichnet,**
**daß** die bestimmten Ereignisse das Ereignis umfassen, daß die Debug-Ressourcen (OCDS; OCDS1-OCDS3) die Ausführung des von der programmgesteuerten Einheit auszuführenden Programms anhalten.

15. Programmgesteuerte Einheit nach einem der vorhergehenden Ansprüche,
**dadurch gekennzeichnet,**
**daß** die bestimmten Ereignisse das Ereignis umfassen, daß die Debug-Ressourcen (OCDS; OCDS1-OCDS3) die Geschwindigkeit verändern, mit welcher das von der programmgesteuerten Einheit auszuführende Programm ausgeführt wird.

16. Programmgesteuerte Einheit nach einem der vorhergehenden Ansprüche,
**dadurch gekennzeichnet,**
**daß** die bestimmten Ereignisse das Ereignis umfassen, daß die Debug-Ressourcen (OCDS; OCDS1-OCDS3) den Core (C; C1-C3) dazu veranlassen, das auszuführende Programm im Single-Step-Modus auszuführen.

17. Programmgesteuerte Einheit nach einem der vorhergehenden Ansprüche,
**dadurch gekennzeichnet,**
**daß** die bestimmten Ereignisse das Ereignis umfassen, daß die Debug-Ressourcen (OCDS; OCDS1-OCDS3) veranlassen, daß durch die programmgesteuerte Einheit Befehle ausgeführt werden, die nicht Bestandteil des von der programmgesteuerten Einheit eigentlich auszuführenden Anwendungsprogramms sind.

18. Programmgesteuerte Einheit nach einem der vorhergehenden Ansprüche,
**dadurch gekennzeichnet,**
**daß** die bestimmten Ereignisse das Ereignis umfassen, daß die Debug-Ressourcen (OCDS; OCDS1-OCDS3) veranlassen, daß durch die programmgesteuerte Einheit Befehle ausgeführt werden, die Teil eines zum Debuggen oder Emulieren der programmgesteuerten Einheit dienenden Programms sind.

## Claims

1. Program-controlled unit, having a core (C; C1-C3) for executing the program to be executed by the program-controlled unit, and having debug resources (OCDS; OCDS1-OCDS3) for tracking and influencing the operations proceeding within the core (C; C1-C3),
**characterized**
**in that** the debug resources (OCDS; OCDS1-OCDS3) are able also to influence other components (WD, P1-Pn, S1-Sn; WD1-WD3, P1-Pn, S1-Sn) of the program-controlled unit and/or the cooperation of these components with one another and/or with the core (C; C1-C3), the debug resources (OCDS; OCDS1-OCDS3) carrying out the influencing of the other components (WD, P1-Pn, S1-Sn; WD1-WD3, P1-Pn, S1-Sn) and/or of the cooperation of these components with one another and/or with the core (C; C1-C3) without the execution of a special instruction and without separate initiating by an external device controlling the debug resources (OCDS; OCDS1-OCDS3) when specific events occur.

2. Program-controlled unit according to Claim 1,
**characterized**
**in that** the other components (WD, P1-Pn, S1-Sn; WD1-WD3, P1-Pn, S1.-Sn) of the program-controlled unit are components whose behavior influences the behavior of the core (C; C1-C3).

3. Program-controlled unit according to Claim 1 or 2,
**characterized**
**in that** the other components (WD, P1-Pn, S1-Sn; WD1-WD3, P1-Pn, S1-Sn) of the program-controlled unit comprise a watchdog timer (WD; WD1-WD3).

4. Program-controlled unit according to one of the preceding claims,
**characterized**
**in that** the influencing of the other components (WD, P1-Pn, S1-Sn; WD1-WD3, P1-Pn, S1-Sn) comprises a deactivation thereof.

5. Program-controlled unit according to one of the preceding claims,
**characterized**
**in that** the influencing of the other components (WD, P1-Pn, S1-Sn; WD1-WD3, P1-Pn, S1-Sn) comprises a turn-off thereof.

6. Program-controlled unit according to one of the preceding claims,
**characterized**
**in that** the influencing of the other components (WD, P1-Pn, S1-Sn; WD1-WD3, P1-Pn, S1-Sn) comprises putting the other components into a specific state.

7. Program-controlled unit according to one of the preceding claims,
**characterized**
**in that** the influencing of the other components (WD, P1-Pn, S1-Sn; WD1-WD3, P1-Pn, S1-Sn) comprises a reset thereof.

8. Program-controlled unit according to one of the preceding claims,
**characterized**
**in that** the influencing of the other components (WD, P1-Pn, S1-Sn; WD1-WD3, P1-Pn, S1-Sn) comprises a reconfiguration thereof.

9. Program-controlled unit according to one of the preceding claims,
**characterized**
**in that** the influencing of the other components (WD, P1-Pn, S1-Sn; WD1-WD3, P1-Pn, S1-Sn) comprises an alteration of the signals fed thereto.

10. Program-controlled unit according to one of the preceding claims,
**characterized**
**in that** the influencing of the cooperation comprises a prevention of the cooperation.

11. Program-controlled unit according to one of the preceding claims,
**characterized**
**in that** the influencing of the cooperation comprises initiating a cooperation of components which normally do not cooperate.

12. Program-controlled unit according to one of the preceding claims,
**characterized**
**in that** the specific events consist in the behavior of the program-controlled unit being altered by actions executed by the debug resources (OCDS1, OCDS1-OCDS3).

13. Program-controlled unit according to one of the preceding claims,
**characterized**
**in that** the specific events consist in the behavior of the core (C; C1-C3) being altered by actions executed by the debug resources (OCDS1; OCDS1-OCDS3).

14. Program-controlled unit according to one of the preceding claims,
**characterized**
**in that** the specific events comprise the event of the debug resources (OCDS1; OCDS1-OCDS3) stopping the execution of the program to be executed by the program-controlled unit.

15. Program-controlled unit according to one of the preceding claims,
**characterized**
**in that** the specific events comprise the event of the debug resources (OCDS; OCDS1-OCDS3) altering the speed with which the program to be executed by the program-controlled unit is executed.

16. Program-controlled unit according to one of the preceding claims,
**characterized**
**in that** the specific events comprise the event of the debug resources (OCDS; OCDS1-OCDS3) causing the core (C; C1-C3) to execute the program to be executed in the single-step mode.

17. Program-controlled unit according to one of the preceding claims,
**characterized**
**in that** the specific events comprise the event of the debug resources (OCDS; OCDS1-OCDS3) causing the program-controlled unit to execute instructions which are not part of the application program that is actually to be executed by the program-controlled unit.

18. Program-controlled unit according to one of the preceding claims,
**characterized**
**in that** the specific events comprise the event of the debug resources (OCDS; OCDS1-OCDS3) causing the program-controlled unit to execute instructions which are part of a program serving for debugging or emulation of the program-controlled unit.

## Revendications

1. Unité commandée par programme, comprenant un noyau (C; C1 à C3) de réalisation du programme exécuté par l'unité commandée par programme et des ressources (OCDS; OCDS1 à OCDS3) de débogage pour suivre et influencer les opérations se déroulant au sein du noyau (C; C1 à C3),
**caractérisée**
**en ce que** les ressources (OCDS; OCDSlà OCDS3) de débogage sont en mesure d'influencer aussi d'autres composants (WD, P1 à Pn; S1 à Sn; WD1 à WD3; P1 à Pn; S1 à Sn) de l'unité commandée par programme et/ou la coopération de ces composants entre eux et/ou avec le noyau (C; C1 à C3), les ressources (OCDS; OCDS1 à OCDS3) de débogage effectuant l'influence des autres composants (WD, P1 à Pn; S1 à Sn; WD1 à WD3; P1 à Pn; SI à Sn) et/ou la coopération de ces composants entre eux et/ou avec le noyau (C; C1 à C3) sans une instruction spéciale et une incitation distincte par un dispositif extérieur commandant les ressources (OCDS; OCDS1 à OCDS3) de débogage lors de l'apparition d'événements déterminés.

2. Unité commandée par programme suivant la revendication 1,
**caractérisée**
**en ce que** les autres composants (WD, P1 à Pn; SI à Sn; cWD1 à WD3; P1 à Pn; S1 à Sn) de l'unité commandée par un programme sont des composants dont le comportement a de l'influence sur le comportement du noyau (C; C1 à C3).

3. Unité commandée par programme suivant la revendication 1 ou 2,
**caractérisée**
**en ce que** les autres composants (WD, P1 à Pn; S1 à Sn; WD1 à WD3; P1 à Pn; S1 à Sn) de l'unité commandée par programme comprennent une minuterie (WD; WD1 à WD3) de surveillance.

4. Unité commandée par programme suivant l'une des revendications précédentes,
**caractérisée**
**en ce qu'**influencer les autres composants (WD, P1 à Pn; Si à Sn; WD1 à WD3; Pl à Pn; S1 à Sn) comprend leur désactivation.

5. Unité commandée par programme suivant l'une des revendications précédentes,
**caractérisée**
**en ce qu'**influencer les autres composants (WD, P1 à Pn; S1 à Sn; WD1 à WD3; P1 à Pn; S1 à Sn) comprend leur mise hors circuit.

6. Unité commandée par programme suivant l'une des revendications précédentes,
**caractérisée**
**en ce qu'**influencer les autres composants (WD, P1 à Pn; S1 à Sn; WD1 à WD3; P1 à Pn; S1 à Sn) comprend mettre les autres composants dans un état déterminé.

7. Unité commandée par programme suivant l'une des revendications précédentes,
**caractérisée**
**en ce qu'**influencer les autres composants (WD, P1 à Pn; S1 à Sn; WD1 à WD3; P1 à Pn; S1 à Sn) comprend leur remise à l'état initial.

8. Unité commandée par programme suivant l'une des revendications précédentes,
**caractérisée**
**en ce qu'**influencer les autres composants (WD, P1 à Pn; S1 à Sn; WD1 à WD3; P1 à Pn; S1 à Sn) comprend leur reconfiguration.

9. Unité commandée par programme suivant l'une des revendications précédentes,
**caractérisée**
**en ce qu'**influencer les autres composants (WD, P1 à Pn; S1 à Sn; WD1 à WD3; P1 à Pn; S1 à Sn) comprend une modification des signaux qui leur sont envoyés.

10. Unité commandée par programme suivant l'une des revendications précédentes,
**caractérisée**
**en ce qu'**influencer la coopération comprend une suppression de la coopération.

11. Unité commandée par programme suivant l'une des revendications précédentes,
**caractérisée**
**en ce qu'**influencer la coopération comprend provoquer une coopération de composants qui ne coopèrent pas normalement.

12. Unité commandée par programme suivant l'une des revendications précédentes,
**caractérisée**
**en ce que** les évènements déterminés consistent en ce que le comportement de l'unité commandée par programme est modifiée par des actions exécutées par les ressources (OCDS1; OCDS1 à OCDS3) de débogage.

13. Unité commandée par programme suivant l'une des revendications précédentes,
**caractérisée**
**en ce que** les évènements déterminés consistent en ce que le comportement du noyau (C; C1 à C3) est modifié par des actions exécutées par les ressources (OCDS1; OCDS1 à OCDS3) de débogage.

14. Unité commandée par programme suivant l'une des revendications précédentes,
**caractérisée**
**en ce que** les évènements déterminés comprennent l'événement suivant lequel les ressources (OCDS; OCDS1 à OCDS3) de débogage comprennent l'exécution du programme exécuté par l'unité commandée par programme.

15. Unité commandée par programme suivant l'une des revendications précédentes,
**caractérisée**
**en ce que** les évènements déterminés comprennent l'événement suivant lequel les ressources (OCDS; OCDS1 à OCDS3) de débogage modifient la vitesse à laquelle le programme exécuté par l'unité commandée par programme est exécuté.

16. Unité commandée par programme suivant l'une des revendications précédentes,
**caractérisée**
**en ce que** les évènements déterminés comprennent l'événement suivant lequel les ressources (OCDS; OCDS1 à OCDS3) de débogage font que le noyau (C; C1 à C3) exécute le programme à exécuter dans le mode single-step.

17. Unité commandée par programme suivant l'une des revendications précédentes,
**caractérisée**
**en ce que** les évènements déterminés comprennent l'événement suivant lequel les ressources (OCDS; OCDS1 à OCDS3) de débogage font que par l'unité commandée par programme sont exécutées des instructions qui ne font pas partie du programme d'application à exécuter proprement dit par l'unité commandée par programme.

18. Unité commandée par programme suivant l'une des revendications précédentes,
**caractérisée**
**en ce que** les évènements déterminés comprennent l'événement suivant lequel les ressources (OCDS; OCDS1 à OCDS3) de débogage font que sont exécutées par l'unité commandée par programme des instructions qui font partie d'un programme servant au débogage ou à l'émulation de l'unité commandée par programme.
